**Europäisches Patentamt**

**European Patent Office**

**Office européen des brevets**

(11) Numéro de publication : **0 031 287**
**B1**

(12) # FASCICULE DE BREVET EUROPÉEN

(45) Date de publication du fascicule du brevet :
**11.04.84**

(51) Int. Cl.³ : **C 08 L 77/00**

(21) Numéro de dépôt : **80420136.6**

(22) Date de dépôt : **09.12.80**

(54) **Compositions polyphasées de polyamides et de polyesteramides.**

(30) Priorité : **10.12.79 FR 7930649**
**05.03.80 FR 8005271**

(43) Date de publication de la demande :
**01.07.81 Bulletin 81/26**

(45) Mention de la délivrance du brevet :
**11.04.84 Bulletin 84/15**

(84) Etats contractants désignés :
**AT BE CH DE FR GB IT LI LU NL SE**

(56) Documents cités :
**DE-A- 2 635 226**
**FR-A- 1 567 660**
**FR-A- 1 585 637**
**FR-A- 2 311 932**
**GB-A- 998 439**
**US-A- 3 388 186**
**US-A- 3 465 059**
**US-A- 3 668 274**
**US-A- 3 845 163**
**US-A- 4 062 819**

(73) Titulaire : **RHONE-POULENC SPECIALITES CHIMI-QUES**
**"Les Miroirs" 18, Avenue d'Alsace**
**F-92400 Courbevole (FR)**

(72) Inventeur : **Coquard, Jean**
**Route du Crest 69290**
**Grezleu la Varenne (FR)**
Inventeur : **Goletto, Jean**
**Le Joli Mai 2, rue Tramler**
**F-69130 Ecully (FR)**

(74) Mandataire : **Trolliet, Maurice et al**
**RHONE-POULENC RECHERCHES Centre de Recher-ches de Saint-Fons Service Brevets B.P. 62**
**F-69190 Saint-Fons (FR)**

Jouve, 18, rue St-Denis, 75001 Paris, France

## Compositions polyphasées de polyamides et de polyesteramides

La présente invention concerne des compositions à base de polyamides ayant des propriétés améliorées de résistance au choc, de ductilité et de cristallisation associées à une très bonne stabilité thermique.

Les polyamides non modifiés, qui présentent une haute énergie de rupture, sont considérés comme des polymères tenaces. Ils sont par contre généralement assez déficients en ce qui concerne la résistance à la propagation de fissures ce que traduisent une certaine sensibilité aux entailles et éventuellement des ruptures par fragilisation. Ce défaut de rupture de manière cassante plutôt que ductile limite notablement leurs emplois et leur fiabilité.

L'amélioration de la résistance au choc des polyamides thermoplastiques a été très étudiée et de nombreuses solutions ont été proposées. Ainsi le brevet britannique 998 439 revendique une composition comprenant un mélange de 50 à 99 % d'un polyamide linéaire et de 1 à 50 % d'un copolymère oléfinique renfermant de 0,1 à 10 moles pour cent de groupements acides, dispersé dans le polyamide sous forme de particules d'un diamètre inférieur à 5 μm.

Les brevets US-A-3 388 186 et 3 465 059 revendiquent des mélanges de polycaproamide et de copolymères d'oléfines contenant de 1 à 20 % en moles d'acides (méth)acryliques ou leurs dérivés, greffés par un aminoacide.

Le brevet US-A-3 668 274 décrit des mélanges de polyamides et de 2,5 à 30 % d'un polymère multiphasé à groupements carboxyliques constitué par une première phase élastomérique (50 à 99,9 % d'acrylate d'alkyle et de butadiène) sur laquelle est greffé un copolymère plus rigide renfermant de 1 à 50 % en poids d'un acide carboxylique insaturé.

Le brevet US-A-3 845 163 décrit des mélanges de 60 à 80 % en poids d'un polyamide et de 15 à 40 % en poids d'un copolymère d'α oléfine renfermant de 1 à 8 % en mole d'un acide carboxylique α, β éthylénique dont au moins 10 % des groupements acides sont neutralisés par des ions métalliques. Le brevet français 2 311 814 revendique de très nombreuses compositions de polyamides à phases multiples présentant une tenacité améliorée qui sont constituées par des mélanges réalisés à l'état fondu de 60 à 99 % en poids d'un polyamide et de 1 à 40 % en poids d'au moins une autre phase contenant des particules d'au moins un polymère ayant un module en traction inférieur au 1/10 de celui du polyamide, qui « adhère » au polyamide et dont la taille des particules est comprise entre 0,01 et 3 μm. Les polymères utilisables comme phase dispersée sont choisis parmi les polymères thermoplastiques ou élastomères, linéaires ou ramifiés non réticulés appartenant aux familles chimiques suivantes :

— copolymères de monomères insaturés et de molécules génératrices de sites adhérents comme : oxyde de carbone, acides carboxyliques à insaturation éthyléniques en α, β ou leurs dérivés, époxydes non saturés, résidus d'une sulfonylazide aromatique substitué par des acides carboxyliques.

— polyuréthannes dérivés de polyesterglycols ou de polyétherglycols

— polymères à mailles polyéther obtenus par réaction de monomères époxydés.

La plupart des additifs polymériques cités dans l'art antérieur présentent une stabilité thermique ou chimique, relativement faible, ce qui limite leur emploi dans le domaine des polyamides conventionnels où les conditions de préparation ou de mise en œuvre sont très dures. Ainsi les polyuréthannes et polymères à maille polyéther décrits dans le brevet français 2 311 814 ne peuvent valablement être utilisés que dans le cas de matrices présentant des points de fusion inférieurs à 200-220 °C.

Les très nombreux copolymères d'oléfine et de dérivés acryliques décrits dans l'art antérieur subissent également une décomposition très sensible lorsqu'ils sont mélangés à l'état fondu à des polyamides de haut point de fusion comme par exemple le poly.:examéthylène adipamide.

L'utilisation de polyester amides obtenus au moins partiellement à partir d'acide dimère comme phase renforçante de compositions thermoplastiques à matrice polyamide n'a pas été décrite jusque-là. Dans la demande allemande DOS 2 635 226, on trouve revendiqué des encres d'impression sans solvant à base de polyamide et/ou de polyesteramide. Toutefois ces mélanges ont des bas points de fusion et une viscosité à l'état fondu faible. De tels mélanges ont ainsi des propriétés opposées à celles que nous recherchons et impliquent la mise en œuvre de moyens différents de ceux que nous préconisons.

Dans la demande française 78/08391 publiée sous le n° 2 386 582, on trouve revendiqué des compositions constituées par un polyamide issu d'acides ω-aminocarboxyliques ou de lactames et par un polyétheresteramide statistique obtenu à partir d'acides ω-aminocarboxyliques ou de lactames, d'un α,ω-dihydroxypolytétrahydrofuranne ayant un poids moléculaire de 160 à 3 000 et d'un acide dicarboxylique. Toutefois, de telles compositions ne présentent pas simultanément une rigidité élevée et une haute résilience. De plus la structure du polyétheresteramide décrit est essentiellement différente de celle des polyesteramides selon l'invention.

Il a maintenant été trouvé des compositions polyphasées à base de polyamides ayant des propriétés améliorées et particulièrement stables à haute température, caractérisées en ce qu'elles sont constituées d'une phase formant matrice qui est une résine polyamide et d'au moins une autre phase dispersée constituée par un polymère choisi parmi les polyesteramides.

La phase formant matrice a avantageusement une masse moléculaire moyenne en nombre d'au moins 5 000. La ou les phases dispersées dans la phase matrice se présentent de préférence sous forme

**0 031 287**

de particules ayant une taille comprise entre 0,001 et 200 μm et de préférence entre 0,01 et 10 μm.

On obtient des résultats particulièrement intéressants par emploi de 55 à 99 % en poids de phase matrice et de 1 à 45 % en poids de phase dispersée.

La ou les phases dispersées sont constituées en tout ou partie par des polymères choisis parmi les polyesteramides. Ces polyesteramides ont avantageusement une teneur en groupement amides inférieure à 40 % et de préférence à 20 % de celle du polyamide formant matrice.

On préférera les polyesteramides ayant une température de transition vitreuse inférieure à 5 °C.

Par compositions polyphasées, on entend des compositions constituées par au moins deux phases qui tant à l'état solide qu'à l'état fondu restent différenciées. On distingue la phase principale ou matrice de la phase ou des phases renforçantes qui sont dispersées dans la matrice.

L'expression « constituées essentiellement par » signifie qu'en plus de la résine polyamide formant matrice et de la ou des phases dispersées, d'autres constituants peuvent être présents dans la composition à condition que les caractéristiques essentielles de ladite composition ne soient pas modifiées de façon notoire par ces constituants.

Par l'expression « au moins une autre phase dispersée sous forme de particules ayant une taille comprise entre 0,01 et 10 μm » on entend qu'au moins une phase dispersée sous forme de particules ayant de 0,01 à 10 μm de dimension maximum à base de polyesteramide répondant à la définition donnée est présente dans la composition. Il peut se trouver en plus une certaine proportion minoritaire d'un ou plusieurs autres polymères sous forme de particules de 0,01 à 10 μm.

L'expression « constitué en tout ou partie par un polymère choisi parmi les polyesteramides... » signifie qu'un ou plusieurs polyesteramides répondant à la définition donnée constituent la phase dispersée qui peut de plus renfermer une certaine proportion d'autre polymère, pour autant que les caractéristiques essentielles de la composition ne sont pas dégradées. Cet autre ou ces autres polymères en proportion minoritaire éventuellement présents dans la phase dispersée en plus de la phase dispersée polyesteramide sont éventuellement constitués par des polymères renforçants tels que ceux décrits dans les brevets cités plus haut dans l'art antérieur.

La résine polyamide formant matrice dans les compositions selon l'invention est une résine bien connue dans l'art antérieur et englobe les résines semi-cristallines et amorphes ayant une masse moléculaire d'au moins 5 000 et couramment appelées nylons. Les polyamides utilisables comprennent ceux décrits dans les brevets des E.U.A. 2 071 250 ; 2 071 251 ; 2 130 523 ; 2 130 948 ; 2 241 322 ; 2 312 966 ; 2 512 606 et 3 393 210. La résine polyamide peut être produite par condensation de quantités équimoléculaires d'un acide dicarboxylique saturé contenant de 4 à 12 atomes de carbone avec une diamine, la diamine contenant de 4 à 14 atomes de carbone. On peut utiliser un excès de diamine de manière à obtenir un excès de groupes terminaux amines par rapport aux groupes terminaux carboxyles dans le polyamide ou un excès de diacide de manière à obtenir un excès de groupes terminaux carboxyles par rapport aux groupes terminaux amines dans le polyamide.

Pour pouvoir contrôler la masse moléculaire des polymères obtenus, on emploie habituellement un agent limiteur de chaîne. La quantité mise en œuvre d'un tel agent dépend de la zone de poids moléculaire désirée. Toutefois, on emploie généralement de 0,1 à 2 % en moles par rapport aux sels. Les agents limiteurs de chaîne sont choisis dans le groupe constitué par les acides carboxyliques et les amines aliphatiques.

Des exemples de polyamides comprennent le polyhexaméthylène adipamide (nylon 6,6), le polyhexaméthylène azélamide (nylon 6,9), le polyhexaméthylène sébacamide (nylon 6,10) et le polyhexaméthylène dodécanamide (Nylon 6,12), les polyamides produits par décyclisation de lactames, c'est-à-dire le polycaprolactame, le poly-(lactame laurique), le poly(acide 11-amino-undécanoïque), le bis(para-amino-cyclohexyl)-méthane dodécanamide. Il est possible aussi d'utiliser dans la présente invention des polyamides préparés par la copolymérisation de deux des polymères ci-dessus ou par la terpolymérisation des polymères ci-dessus ou de leurs constituants, par exemple un copolymère d'acide adipique, d'acide isophtalique et d'hexaméthylène-diamine. De préférence, les polyamides sont linéaires avec un point de fusion au-dessus de 200 °C.

Les polyesteramides constituant la ou les phases renforçantes dispersées dans la matrice sont des polyesteramides obtenus à partir :

a) de composés acides constitués par de 1 à 100 % d'acide dimère et de 0 à 99 % d'un autre diacide, ou d'un mélange de diacides ou d'autres réactifs difonctionnels générateurs de fonctions acides ou dérivés de fonctions acides et pouvant renfermer d'autres fonctions, chimiquement stables dans les conditions de la polymérisation et ayant de préférence un nombre d'atome de carbone inférieur à 13 pour les diacides et inférieur à 25 pour des dérivés difonctionnels.

b) de diol linéaire ou ramifié ou cyclique à chaîne courte ayant un nombre d'atome de carbone compris de préférence entre 2 et 8 et/ou de polydiol comme les polyoxyéthylènes glycol ou les polyoxytétraméthylèneglycols ayant un poids moléculaire compris de préférence entre 500 et 5 000,

c) de diamine ou de mélange de diamine de préférence à chaîne courte, ayant un nombre d'atome de carbone inférieur ou égal à 12, ces diamines pouvant comporter dans leur chaîne un hétéro atome comme par exemple l'oxygène et le soufre ou d'aminoalcools ou de mélanges de diamines et d'aminoalcools.

Par acides dimères on entend des acides gras polymères obtenus par fractionnement d'acides gras

3

polymérisés et contenant en poids plus de 95 % environ de dimères. Par acides gras, on entend les monoacides aliphatiques saturés ou insaturés ayant de 8 à 24 atomes de carbone.

Parmi les acides gras saturés linéaires ou ramifiés on peut citer : les acides caprylique, pélargonique, caprique, laurique, myristique, palmitique et isopalmitique, stéarique, arachidique, behénique et lignocérique.

Parmi les acides gras à insaturation éthylénique linéaires ou ramifiés on peut citer : les acides 3-octénoïque, 11-dodécénoïque, lauroléique, myristoléique, palmitoléique, gadoléique, cétoléique, linoléique, linolénique, eicosatétraenoïque et chaulmoogrique. Certains acides à insaturation acétylénique peuvent aussi conduire à des acides polymères, mais ils n'existent pas de façon intéressante à l'état naturel et de ce fait leur intérêt économique est très faible.

Les acides gras polymères obtenus par polymérisation en présence le plus souvent de peroxydes ou d'acides de Lewis peuvent être fractionnés. On peut aussi les hydrogéner pour réduire leur taux d'insaturation et ainsi réduire leur coloration.

Les produits de départ les plus couramment utilisés sont des compositions issues d'acides oléique et linoléique hydrogénés et qui renferment :

— de  1 à 15 % en poids d'acide monobasique
— de 80 à 98 % en poids d'acide dibasique
— de  1 à 25 % en poids d'acide tribasique ou au-delà.

On utilisera avantageusement selon l'invention des compositions dont la fraction d'acide dimère est supérieure à 95 %. On préférera des acides dimères dont la teneur en acide monofonctionnel est inférieure à 1 % en poids, dont la teneur en acide de fonctionnalité supérieure à 2 est inférieure à 5 % en poids et de préférence inférieure à 3 % en poids.

Parmi les autres diacides ou composés difonctionnels générateurs ou dérivés de fonctions acides et pouvant renfermer d'autres fonctions, on trouve de préférence des composés comme des esters ou les produits de réactions d'ester et de diamine comme par exemple le produit de réaction de l'hexaméthylènediamine et du diméthyltéréphtalate.

Les autres polymères pouvant entrer dans la composition des phases dispersées selon l'invention sont d'une manière générale les polymères présentant vis-à-vis des polyesteramides utilisés pour la phase dispersée une miscibilité totale ou partielle dans une gamme de température comprise entre 20° et 300 °C. Les polymères répondant à cette caractéristique et porteurs de groupements fonctionnels réactifs vis-à-vis des polyamides, ou des polyesters sont particulièrement intéressants comme agents de réticulation des polyesteramides utilisés comme phase renforçante selon l'invention.

Les compositions selon l'invention peuvent naturellement être modifiées par un ou plusieurs additifs tels que des stabilisants et des inhibiteurs de dégradation par oxydation, par l'ultraviolet ou la lumière, ou par la chaleur ; des lubrifiants et des agents de démoulage, des matières colorantes comprenant les colorants et les pigments, des charges et renforcements fibreux et en particules, des agents de nucléation, des plastifiants, etc.

Les stabilisants peuvent être incorporés dans la composition à un stade quelconque de la préparation de la composition thermoplastique. De préférence, les stabilisants sont inclus assez tôt pour empêcher un début de dégradation avant que la composition puisse être protégée. Ces stabilisants doivent être compatibles avec la composition.

Les agents de stabilisation à l'oxydation et à la chaleur utiles dans les matières de la présente invention comprennent ceux utilisés généralement dans les polyamides. Ils comprennent ceux utilisés généralement dans les polyamides. Ils comprennent, par exemple, jusqu'à 1 % en poids, par rapport au poids du polyamide, d'halogénures de métaux du groupe I, par exemple de sodium, de potassium, de lithium avec des halogénures cuivreux, par exemple du chlorure, du bromure, de l'iodure, des phénols stériquement empêchés, des hydroquinones et divers membres substitués de ces groupes et leurs combinaisons.

Les agents de stabilisation à l'ultraviolet, par exemple dans une proportion allant jusqu'à 2 %, par rapport au poids de polyamide, peuvent aussi être ceux utilisés habituellement avec les polyamides.

Comme exemples, on peut mentionner divers résorcinols substitués, salicylates, benzotriazoles, benzophénones, etc.

On peut aussi utiliser des composés antioxydants de type connus comme les amines aromatiques substituées. Un exemple de tel composé est le 4,4'-bis ($\alpha$-$\alpha'$-diméthybenzyl)diphénylamine.

Des lubrifiants et agents de démoulage utilisables, par exemple dans une proportion allant jusqu'à 10 % par rapport au poids de la composition, sont l'acide stéarique, l'alcool stéarique, les stéaramides ; des colorants organiques, des pigments, par exemple le bioxyde de titane, le noir de carbone, etc., peuvent être utilisés à des taux allant jusqu'à 5 % en poids par exemple.

Les charges et renforçants fibreux ou en particules, par exemple des fibres de carbone, des fibres de verre, de la silice amorphe, de l'amiante, du silicate de calcium, du silicate d'aluminium, du carbonate de magnésium, du kaolin, de la craie, du quartz pulvérisé, du mica, du feldspath, etc., peuvent être présents dans des proportions allant jusqu'à 50 % par rapport au poids de la composition dans la mesure où les propriétés mécaniques recherchées ne sont pas notoirement dégradées.

Les compositions peuvent aussi contenir des agents nucléants, par exemple du talc, du fluorure de calcium, du phényl phosphinate de sodium, de l'alumine et du polytétrafluoroéthylène finement divisé, etc., des plastifiants, dans des proportions allant jusqu'à environ 20 % par rapport au poids de la composition, par exemple du phtalate de dioctyle, du phtalate de dibenzyle, du phtalate de butyle et de benzyle, des huiles d'hydrocarbures, du N-n-butylbenzène sulfonamide, de l'ortho et du paratoluène-éthyl sulfonamides, etc.

Tout procédé permettant la dispersion d'une phase dans l'autre peut convenir.

On travaillera avantageusement avec des polymères à l'état fondu dans des conditions de cisaillement qui permettent de disperser dans la matrice polyamide le ou les polymères renforçants en particules de dimensions comprises entre 0,01 et 10 µm et de préférence entre 0,05 et 5 µm.

Un appareillage de type BUSS ou une extrudeuse à une ou plusieurs vis équipée ou non de système de dégazage peuvent convenir pour réaliser cette dispersion.

Les compositions thermoplastiques renforcées peuvent être mises sous la forme de divers articles utiles par des techniques classiques de moulage ou d'extrusion utilisées dans la fabrication d'articles thermoplastiques, comme des pièces moulées, des produits extrudés, par exemple des tubes, des pellicules, des feuilles, des fils et fibres orientées, des stratifiés et des revêtements de fils métalliques.

Les compositions selon l'invention sont caractérisées par une combinaison remarquable de propriétés, dont les plus importantes sont de remarquables propriétés de ténacité, compte tenu de la quantité du polymère renforçant présent avec la matrice de polyamide et d'aptitude à la cristallisation.

Un tel ensemble de propriétés et particulièrement l'élasticité même à basse température permet d'envisager de très nombreuses applications en particulier dans les domaines de la mécanique, de l'aviation, de l'automobile, de l'électronique, de l'outillage.

Les exemples qui vont suivre illustrent les compositions revendiquées selon l'invention.

Dans ces exemples, un certain nombre de contrôles des constituants primaires ou des polyamides sont effectués. De même diverses propriétés des compositions sont mesurées. On indique ci-dessous les modes opératoires ou normes selon lesquels ces contrôles sont effectués.

### 1. Conditionnement des polymères à l'état hygrométrique 0 (EH 0)

les éprouvettes moulées sont placées en dessicateur sur Silicagel et séchées 24 h à température ambiante sous 0,67 à 1,33 mbar avant de réaliser les mesures.

### 2. Résistance au choc entaillé

La résistance au choc CHARPY entaillé est mesurée selon la recommandation ISO R 179.

Les déterminations sont faites sur barreaux moulés ayant les dimensions suivantes L = 50 ± 0,1 mm − 1 = 6 ± 0,2 mm ; e = 4 ± 0,2 mm − longueur de l'entaille 0,8 ± 0,1 épaisseur sous entaille 2,7 ± 0,2 mm.

On opère sur impactomètre ZWICK à 23 °C les éprouvettes étant conditionnées à EH 0.

Le résultat est exprimé en Joule/cm$^2$.

### 3. Module en flexion à EH 0 et 23 °C

Cette détermination est faite sur éprouvettes de type barreau de 80 × 10 × 4 mm moulées par injection, selon la recommandation ISO R 178.

### 4. Détermination des groupements terminaux

$NH_2$ : Dosage potentiométrique automatique de la solution de polymère dans le mélange phénol-eau 90/10 en poids par HCl. Le résultat est donné en équivalents gramme pour $10^6$ g de polymère.

COOH : Dissolution à chaud sous atmosphère d'azote du polymère dans l'alcool benzylique et dosage acidimétrique sous azote de cette solution chaude par une solution glycolique de potasse en présence de phénolphtaléine. Le résultat est donné en équivalents gramme pour $10^6$ g de polymère.

### 5. Détermination de la viscosité inhérente

Le polymère séché est mis en solution à 0,5 % dans le métacrésol. On mesure le temps d'écoulement de cette solution par rapport à celui du solvant pur. La valeur de la viscosité inhérente est donnée par la formule :

$$\eta \text{ inh.} = 4,6 \ (\log. \ t_1 - \log. \ t_0)$$

$t_1$ = temps d'écoulement de la solution
$t_0$ = temps d'écoulement du solvant

### 6. Analyse microcalorimétrique

5

On caractérise les polymères ou les mélanges de polymères par leur viscosité intrinsèque mais aussi par les caractéristiques de fusion et de cristallisation telles que le point de fusion Tf et le point de cristallisation au refroidissement TcR dont la différence constitue la surfusion $\Delta$ caractérisant la nucléation. Une autre caractéristique de cristallisation essentiellement liée à la vitesse de croissance des cristallites, réside dans la détermination de Tg $\alpha$, $\alpha$ étant l'angle formé par l'horizontale de la ligne de base avec la partie initiale du pic de l'exotherme de cristallisation au refroidissement correspondant à des conditions strictes d'observation, l'horizontale de la ligne de base et le pic de l'exotherme de cristallisation étant déterminées sur la courbe obtenue lors de l'analyse par microcalorimètre différentielle de l'échantillon étudié.

Ces déterminations sont effectuées sur un échantillon soumis à des variations de températures tant en montée qu'en descente de 10 °C/min.

L'amélioration de la cristallisation des compositions selon l'invention peut être évaluée soit par la diminution de $\Delta$ comparativement au coefficient $\Delta$ de la matrice polyamide soit encore par l'élévation de Tg $\alpha$ qui caractérise l'accélération de la croissance des cristallites.

### 7. Transition vitreuse

La température de transition vitreuse correspond à la chute brutale du module de cisaillement en fonction de la température. Elle peut être déterminée sur le graphique représentant les variations du module de torsion en fonction de la température, variations mesurées par analyse thermomécanique au pendule de torsion automatique.

On précise ensuite les caractéristiques de la matrice utilisée dans les exemples ci-après :

### Polyhexaméthylène adipamide

| | |
|---|---|
| $\eta$ inh. : | 1,173 dl/g |
| groupements terminaux COOH : | 66,07 |
| groupements terminaux NH$_2$ : | 45,83 |
| résistance au choc entaillé : | $0,56 \pm 0,05$ J/cm$^2$ |
| module en flexion : | $240 \pm 20$ daN/mm$^2$ |
| Tg par analyse thermomécanique : | 55° |

Tf = 260 °C
TcR = 210 °C
$\Delta$ = 50 °C
Tg $\alpha$ = 17
Teneur en groupements amides pour 100 g : 0,885
Masse moléculaire moyenne en nombre : 17 900

### Exemple 1

Préparation de polyesteramide à partir d'acide dimère d'éthylèneglycol et d'hexaméthylène diamine

On opère dans un autoclave inox de 7,5 l muni d'une agitation de type ancre équipé d'une dynamo tachymétrique.

On introduit à température ambiante dans l'autoclave les réactifs suivants :

— dimère d'acide gras ayant un taux de monomère de 0,03 %
et un taux de trimère voisin de 3 % (vendu sous la marque déposée
Empol 1010 par Unilever Emery)      892,04 g (1,289 mole)
— hexaméthylène diamine pure cristallisée :      141,23 g (1,217 mole)

La charge de ces réactifs est calculée de façon à préparer un prépolyamide de poids molaire 3 000 à groupements COOH terminaux.

Les réactifs étant introduits à température ambiante on purge soigneusement sous azote puis on porte sous agitation la température de la masse à 270 °C en 2 heures. On maintient ensuite 45 min à 270 °C puis on ramène à température ambiante.

On introduit alors dans l'autoclave les réactifs suivants :

| | |
|---|---|
| acide dimère : | 1 915,6 g (3,323 moles) |
| — éthylène glycol : | 339,7 g (5,478 moles) |
| — glycolate de titane : | 0,5 g |

On purge de nouveau soigneusement sous azote puis on porte sous agitation la température de la masse à 200 °C en 1 h 15 pour effectuer la distillation de l'eau. La température est ensuite portée à 270 °C en 1 h 15. On établit ensuite en 1 h 30 le vide jusqu'à atteindre 0,53-0,66 mbar. On polycondense ensuite pendant 1 h 15 à 270 °C sous 0,53-0,66 mbar.

Le polymère est ensuite soutiré sous pression d'azote et recueilli dans l'eau puis granulé après refroidissement dans l'azote liquide.

Les caractéristiques du produit obtenu sont portées dans le tableau n° 1 ci-après.

## Exemple 2

Préparation de polyesteramide à partir d'acide dimère, d'acide sébacique, d'éthylène glycol et d'hexaméthylène diamine (HMD)

On prépare dans un premier temps un polyamide acide dimère-acide sébacique (70/30 P/P) et hexaméthylène diamine dans les conditions nécessaires pour obtenir un poids moléculaire de 2 000 et un polyamide à COOH terminaux.

Dans un réacteur en verre Pyrex (marque déposée) de 1 litre on introduit à température ambiante les réactifs suivants :

| | |
|---|---|
| — acide dimère : | 319,4 g (0,554 mole) |
| — acide sébacique : | 260,2 g (1,288 mole) |
| — HMD pure cristallisée | 170   g (1,467 mole) |

On purge soigneusement sous azote et porte sous agitation la température de la masse à 265° en 2 heures. La masse obtenue est parfaitement homogène. On maintient 1 h 15 à 265 °C. Le polymère obtenu est soutiré dans l'eau puis broyé et séché à 100° en étuve sous vide. Les caractéristiques du copolyamide obtenu sont les suivantes :

| | |
|---|---|
| — groupements terminaux-COOH : | 982,5 |
| — groupements terminaux-NH$_2$ : | 2,8 |
| — point de fusion (Pf) par analyse thermique différentielle (ATD) : | 185 °C |
| — Poids molaire d'après groupements terminaux | 2 070 |

Dans un autoclave inox de 7,5 l on introduit à température ambiante les réactifs suivants :

| | |
|---|---|
| Prépolyamide préparé précédemment | 522,6 g |
| Ethylène glycol | 307,7 g (4,962 moles) |
| Acide dimère | 1 744,5 g (3,026 moles) |
| Glycolate de titane | 0,414 g |

On purge soigneusement sous azote, agite et porte la température de la masse à 270 °C en 2 h 15. On établit en 1 h 15 le vide jusqu'à atteindre 0,4 mbar. L'agitation est maintenue 2 h 30 à 270 °C sous 0,4 mbar. Le polymère est ensuite soutiré sous pression d'azote, recueilli dans l'eau puis granulé après refroidissement à l'azote liquide.

Les caractéristiques du produit obtenu sont portées sur le tableau ci-après.

## Exemple 3

Préparation de polyétheresteramide à partir d'acide dimère, de polyoxytétraméthylèneglycol (poly THF), d'acide sébacique et d'éthylène glycol

Condensation acide dimère — Poly THF de PM 2 000.
Dans un autoclave inox de 7,5 l, on introduit les réactifs suivants :

| | |
|---|---|
| Acide dimère : | 1 180,7 g (2,048 moles) |
| Poly THF : | 2 048   g (1,024 mole) |
| (vendu sous la marque déposée TERACOL 2 000) | |

On purge soigneusement sous azote, agite et amène la température de la masse à 250 °C en 2 heures. On établit ensuite le vide en 1 heure jusqu'à atteindre 0,4 mbar. La masse est maintenue 2 h à 250 °C sous 0,4 mbar. La masse est ensuite ramenée à température ambiante. Le dosage des COOH réalisé sur le résidu indique 0,064 2 COOH/100 g.

Dans le même autoclave, on maintient 2 800 g du produit préparé ci-dessus, on ajoute les réactifs suivants :

| | |
|---|---|
| Polyamide acide dimère-acide sébacique Hexaméthylène diamine PM 2 000 à COOH terminaux (identique à celui décrit dans l'exemple précédent) | 650 g (0,068 57 COOH) |

| Ethylène glycol | 154 g (2,483 3 moles) |
|---|---|
| Glycolate de titane | 0,945 g |

L'appareil est purgé soigneusement sous azote, la température de la masse est portée à 250 °C en 1 h, et maintenue ensuite 1 heure. On établit ensuite en 1 h 15 le vide jusqu'à atteindre 0,4 mbar. On polycondense 1 h 45 à 250 °C sous 0,4 mbar. Le polymère est soutiré sous pression d'azote refroidi à l'eau puis granulé après passage dans un mélange acétone carboglace. Les caractéristiques du produit obtenu sont indiquées dans le tableau.

### Tableau n° 1

| Exemple | Viscosité inhérente à 0,5 % dans m-crésol à 25 °C en dl/g | * Caractéristiques thermiques des endothermes de fusion | Température de ramollissement (banc Kofler) °C | Caractéristiques thermomécaniques en torsion au pendule automatique | | | |
|---|---|---|---|---|---|---|---|
| | | | | Tg °C | Module en torsion MPa | | |
| | | | | | − 20 °C | 0 °C | 20 °C |
| 1 | 0,71 | non observé | 45-50 | − 50 | 10 | 9 | 9 |
| 2 | 0,84 | 55 °C | 50 | − 49 | 8,5 | 8,3 | 8 |
| 3 | 1,18 | 17 °C | 50-60 | − 75 | 40 | 23 | 5,5 |

* Les caractéristiques thermiques sont déterminées par microcalorimétrie différentielle sous azote avec montée en température de 10 °C par min.

## Exemples 4 à 6

Préparation des compositions

Les granulés de polyamide 6.6 sont séchés durant 15 h à 110 °C sous 1,33 à 2,66 mbars, ceux de polyesteramide durant 48 h à température ambiante sous 1,33 à 2,66 mbars, puis mélangés avant extrusion en évitant la reprise d'humidité.

Le mélange de granulés est extrudé au moyen d'une boudineuse de marque Thoret ayant un diamètre de vis de 20 mm et une longueur de 400 mm avec une filière ayant un diamètre de 2,5 mm, à une température de 275 °C. Le jonc est refroidi par passage dans un bain d'eau puis granulé.

Les caractéristiques des compositions obtenues par mélange de 20 % en poids des polyesteramides des exemples 1 à 3 et de 80 % de polyamide 6.6 sont indiquées dans le tableau ci-joint n° 2.

### Tableau n° 2

| Exemple | Phase renforçante | | * Caractéristiques Thermiques sous $N_2$ | | Taille Particule | Caractéristiques mécaniques à EH O et à 23 °C | |
|---|---|---|---|---|---|---|---|
| | Nature | Teneur % | Δ | Tg α | μ m | Module flexion en MPa | Résistance choc Charpy entaillé en $J/cm^2$ |
| 4 | exemple 1 | 20 | 33 | 54 | 1-5 | 1 820 ± 60 | 1,6-1,9 |
| 5 | exemple 2 | 20 | — | — | 1-5 | 1 800 ± 50 | 2,2 |
| 6 | exemple 3 | 20 | — | — | 1-5 | 1 800 ± 50 | 3,0 |
| Témoin PA 6.6 | 0 | 0 | 50 | 17 | — | 2 400 ± 200 | 0,5 |

* Les caractéristiques thermiques sont déterminées par microcalorimétrie différentielle avec des variations de température de 10 °C/min.

## Revendications

1. Compositions polyphasées à base de polyamide ayant des propriétés physiques améliorées caractérisées en ce qu'elles sont constituées essentiellement par 50 à 99 % en poids d'une phase formant matrice qui est une résine polyamide de type nylon de masse moléculaire moyenne en nombre d'au moins 5 000 et de 1 à 50 % en poids d'au moins une autre phase dispersée sous forme de particules ayant une taille comprise entre 0,01 et 10 μm constituée par un ou plusieurs polyesteramides présentant une teneur en groupements amides inférieure à 40 % de celle de la résine polyamide formant matrice et ayant une température de transition vitreuse inférieure à 5 °C, lesdits polyesteramides étant obtenus à partir de réactifs essentiellement difonctionnels ayant au moins une fonction acide carboxylique ou dérivée et dont au moins 1 % en mole est constitué par des diacides ou dérivés ayant de 20 à 60 atomes de carbone, de composés dihydroxylés et de composés diaminés ou d'aminoalcools ou de mélanges de composés diaminés et d'aminoalcools, ladite phase dispersée pouvant renfermer en outre un ou plusieurs autres polymères qui présentent vis-à-vis des polyesteramides utilisés pour la phase dispersée une miscibilité totale ou partielle dans une gamme de températures comprises entre 20 °C et 300 °C.

2. Compositions polyphasées selon la revendication 1 caractérisées en ce qu'elles sont constituées par 55 à 99 % en poids d'une phase formant matrice et de 1 à 45 % en poids de phase(s) dispersée(s).

3. Compositions selon la revendication 1 caractérisées en ce qu'elles sont constituées essentiellement par 70 à 90 % en poids d'une phase formant matrice qui est un polyamide de masse moléculaire moyenne en nombre supérieur à 10 000 et de 10 à 30 % en poids d'au moins une autre phase dispersée sous forme de particules ayant une taille comprise entre 0,05 et 5 μm constituée en tout ou partie par un polyesteramide ayant une température de transition vitreuse inférieure à − 30 °C.

4. Compositions selon la revendication 1 caractérisées en ce que le polyamide formant matrice est un poly-caprolactame ou un polyhexaméthylène adipamide.

5. Compositions selon la revendication 1 caractérisées en ce que dans les polyesteramides la proportion pondérale en segments esters est comprise entre 20 et 80 % du poids du polyesteramide.

6. Compositions selon la revendication 1 caractérisées en ce que dans les polyesteramides les diacides ayant de 20 à 60 atomes de carbone sont des dimères d'acides gras.

7. Compositions selon la revendication 1 caractérisées en ce que dans les polyesteramides les composés dihydroxylés sont essentiellement de l'éthylèneglycol, des poly-oxytétraméthylèneglycols de poids moléculaire compris entre 500 et 5 000 et des mélanges de ces composés.

8. Compositions selon la revendication 1 ou 7 caractérisées en ce que dans les polyesteramides les réactifs difonctionnels ayant au moins un groupement carboxylique ou dérivé sont constitués par un mélange d'acides dimères et de diacides linéaires ayant de 2 à 12 atomes de carbone ou de leurs dérivés.

9. Produits conformés obtenus à partir de compositions selon les revendications 1 à 8.

## Claims

1. Polyphase compositions based on polyamide, having improved physical properties, characterised in that they essentially consist of 50 to 99 % by weight of a matrix-forming phase which is a nylon-type polyamide resin having a number-average molecular weight of at least 5 000, and 1 to 50 % by weight of at least one other phase dispersed in the form of particles having a size of between 0.01 and 10 μm, consisting of one or more polyesteramides having a proportion of amide groups less than 40 % of that of the matrix-forming polyamide resin and having a glass transition temperature below 5 °C, the said polyesteramides being obtained from essentially difunctional reactants which have at least one carboxylic acid group or derivative thereof, and at least 1 mol % of which consists of diacids or derivatives thereof having from 20 to 60 carbon atoms, from dihydroxyl compounds and from diamino compounds or aminoalcohols or mixtures of diamino compounds and aminoalcohols, it also being possible for the said disperse phase to contain one or more other polymers which are totally or partially miscible, in a temperature range of between 20 °C and 300 °C, with the polyesteramides used for the disperse phase.

2. Polyphase compositions according to Claim 1, characterised in that they consist of 55 to 99 % by weight of a matrix-forming phase and 1 to 45 % by weight of disperse phase(s).

3. Compositions according to Claim 1, characterised in that they essentially consist of 70 to 90 % by weight of a matrix-forming phase which is a polyamide having a number-average molecular weight of more than 10 000, and 10 to 30 % by weight of at least one other phase dispersed in the form, of particles having a size of between 0.05 and 5 μm, consisting wholly or partly of a polyesteramide having a glass transition temperature below − 30 °C.

4. Compositions according to Claim 1, characterised in that the matrix-forming polyamide is a polycaprolactam or a polyhexamethylene adipamide.

5. Compositions according to Claim 1, characterised in that the proportion by weight of ester segments in the polyesteramides is between 20 and 80 % of the weight of the polyesteramide.

6. Compositions according to Claim 1, characterised in that the diacids having from 20 to 60 carbon atoms, in the polyesteramides, are fatty acid dimers.

7. Compositions according to Claim 1, characterised in that the dihydroxyl compounds in the polyesteramides are essentially ethylene glycol, polyoxytetramethylene glycols having a molecular weight of between 500 and 5 000, and mixtures of these compounds.

8. Compositions according to Claim 1 or 7, characterised in that the difunctional reactants having at least one carboxylic acid group or derivative thereof, in the polyesteramides, consist of a mixture of dimeric acids and linear diacids having from 2 to 12 carbon atoms, or derivatives thereof.

9. Shaped products obtained from compositions according to Claims 1 to 8.

**Ansprüche**

1. Mehrphasige Massen auf Polyamidbasis mit verbesserten physikalischen Eigenschaften, dadurch gekennzeichnet, daß sie im wesentlichen aus 50 bis 99 Gew.-% einer die Grundmasse bildenden Phase, die ein Polyamidharz vom Nylontyp mit einer durchschnittlichen Molekularmasse von zumindest 5 000 ist, und aus 1 bis 50 Gew.-% zumindest einer anderen in Form von Teilchen mit einer Teilchengröße von 0,01 bis 10 μm dispergierten Phase, die gebildet ist aus einem oder mehreren Polyesteramiden, die einen Gehalt an Amidgruppen aufweisen, der geringer als 40 % des Amidgruppengehalts des die Grundmasse bildenden Polyamidharzes ist, und eine Glasübergangstemperatur unterhalb 5 °C haben, besteht, daß die Polyesteramide aus im wesentlichen difunktionellen Reagenzien mit zumindest einer Carbonsäure- oder Carbonsäurederivatfunktion erhalten wurden, von welchen zumindest 1 Mol% aus Disäuren oder Disäurederivaten mit 20 bis 60 Kohlenstoffatomen, dihydroxylierten Verbindungen und Diaminverbindungen oder Aminoalkoholen oder Mischungen der Diaminverbindungen und der Aminoalkohole besteht und daß die dispergierte Phase gegebenenfalls außerdem ein oder mehrere andere Polymere enthält, die gegenüber den für die dispergierte Phase verwendeten Polyesteramiden eine vollständige oder teilweise Mischbarkeit in einem Temperaturbereich zwischen 20 und 300 °C aufweisen.

2. Mehrphasige Massen nach Anspruch 1, dadurch gekennzeichnet, daß sie aus 55 bis 99 Gew.-% einer die Grundmasse bildenden Phase und aus 1 bis 45 Gew.-% dispergierter Phase (dispergierten Phasen) bestehen.

3. Massen nach Anspruch 1, dadurch gekennzeichnet, daß sie im wesentlichen aus 70 bis 90 Gew.-% einer die Grundmasse bildenden Phase, die ein Polyamid mit einer durchschnittlichen Molekularmasse von mehr als 10 000 ist, und aus 10 bis 30 Gew.-% zumindest einer weiteren in Form von Teilchen mit einer Teilchengröße zwischen 0,05 und 5 μm dispergierten Phase, die zur Gänze oder teilweise aus einem Polyesteramid mit einer Glasübergangstemperatur unterhalb − 30 °C gebildet ist, bestehen.

4. Massen nach Anspruch 1, dadurch gekennzeichnet, daß das die Grundmasse bildende Polyamid ein Polycaprolactam oder ein Polyhexamethylenadipamid ist.

5. Massen nach Anspruch 1, dadurch gekennzeichnet, daß der Gewichtsanteil an Estersegmenten in den Polyesteramiden 20 bis 80 Gew.-% des Polyesteramids ausmacht.

6. Massen nach Anspruch 1, dadurch gekennzeichnet, daß die Disäuren mit 20 bis 60 Kohlenstoffatomen in den Polyesteramiden Dimere von Fettsäuren sind.

7. Massen nach Anspruch 1, dadurch gekennzeichnet, daß die dihydroxylierten Verbindungen in den Polyesteramiden im wesentlichen Äthylenglykol, Polyoxytetramethylenglykole mit Molekularmassen zwischen 500 und 5 000 und Mischungen dieser Verbindungen sind.

8. Massen nach Anspruch 1 oder 7, dadurch gekennzeichnet, daß die difunktionellen Reagenzien mit zumindest einer Carbonsäure- oder Carbonsäurederivatgruppe in den Polyesteramiden gebildet sind aus einer Mischung von dimeren Säuren und geradkettigen Disäuren mit 2 bis 12 Kohlenstoffatomen oder von ihren Derivaten.

9. Die entsprechenden Produkte, erhalten aus den Massen nach den Ansprüchen 1 bis 8.